# FASCICULE DE BREVET EUROPEEN

(11) **EP 1 099 875 B1**
(45) Date de publication et mention de la délivrance du brevet: **09.08.2006**
(21) Numéro de dépôt: 00403066.4
(22) Date de dépôt: 06.11.2000
(51) Int. Cl.: F16F 13/10, B60K 5/12, F16F 15/027, F16F 13/26

(54) **Procédé pour atténuer des vibrations, support antivibratoire hydraulique actif, et véhicule comprenant un tel support**
Schwingungsdämpfungsverfahren, aktives, hydraulisches, schwingungsdämpfendes Lager, und Fahrzeug mit einem solchen Lager
Method for attenuating vibration, active hydraulic damping support, and vehicle comprising such a support

(30) Priorité: 09.11.1999 FR 9914063
(43) Date de publication de la demande: 16.05.2001
(73) Titulaire: HUTCHINSON, 75008 Paris (FR)
(72) Inventeur: Gastineau, Jean-Luc, 41160 St-Jean-Froidmentel (FR); Durand, Sylvain, 45190 Villorceau (FR); Gennesseaux, André, 28200 Conie-Molitard (FR)
(74) Mandataire: Burbaud, Eric

(56) Documents cités:
- EP-A- 0 939 243
- FR-A- 2 755 489
- GB-A- 2 332 034
- PATENT ABSTRACTS OF JAPAN vol. 008, no. 238 (M-335), 31 octobre 1984 (1984-10-31) & JP 59 117929 A (TOYODA GOSEI KK;OTHERS: 01), 7 juillet 1984 (1984-07-07)

## Description

La présente invention est relative aux procédés pour atténuer des vibrations, aux supports antivibratoires hydrauliques actifs et aux véhicules comprenant de tels supports, ces supports étant destinés notamment au montage des moteurs de véhicules automobiles et produisant des contre-vibrations visant à annuler les effets des vibrations de ces moteurs. Le document FR-A-2 755 489 présente par exemple un tel support antivibratoire.

Plus particulièrement, l'invention concerne un procédé pour atténuer des vibrations entre deux éléments rigides en interposant entre ces éléments un support antivibratoire hydraulique actif comportant :
- des première et deuxième armatures rigides solidarisées respectivement avec les deux éléments rigides à réunir,
- un corps en élastomère qui relie entre elles les deux armatures et qui délimite partiellement une chambre de travail remplie d'un certain volume de liquide,
- une paroi souple délimitant partiellement une chambre de compensation remplie de liquide, laquelle est reliée à la chambre de travail par un passage étranglé également rempli de liquide,
- une cloison rigide qui est solidaire de la deuxième armature et qui est interposée entre la chambre de travail et la chambre de compensation, cette cloison rigide comportant un premier ajutage,
- un organe excitateur qui obture directement ou indirectement le premier ajutage de la cloison rigide, cet organe excitateur présentant une première face qui communique avec le liquide contenu dans la chambre de travail et une deuxième face isolée de ladite chambre de travail, ledit organe excitateur étant monté mobile perpendiculairement à la cloison rigide,
   procédé dans lequel on fait vibrer l'organe excitateur en créant des variations de volume de la chambre de travail présentant une première amplitude ΔV pour générer des contre-vibrations.

Ce procédé connu présente l'inconvénient que, lorsque l'organe excitateur est actionné de façon à être bloqué dans une position de butée, ce qui se produit généralement pendant le roulage du véhicule, les vibrations de relativement haute fréquence et de relativement basse amplitude (par exemple, vibrations de fréquence supérieure à 20 Hz et d'amplitude inférieure à 1 mm) sont en grande partie transmises entre les première et deuxième armatures du support antivibratoire.

En effet, le passage étranglé qui relie la chambre de travail à la chambre de compensation est dimensionné pour atténuer les effets des mouvements vibratoires de relativement basse fréquence (par exemple inférieure à 20 Hz) et de relativement grande amplitude (par exemple supérieure à 1 mm), mais il se comporte sensiblement comme un conduit fermé vis à vis des vibrations de haute fréquence.

La présente invention a notamment pour but de pallier cet inconvénient.

A cet effet, selon l'invention, un procédé du genre en question est caractérisé en ce qu'on utilise un support antivibratoire dont la cloison rigide est percée d'un deuxième ajutage qui est obturé par un organe de clapet librement déplaçable perpendiculairement à la cloison rigide, cet organe de clapet présentant une première face en contact avec le liquide contenu dans la chambre de travail et une deuxième face isolée de la chambre de travail, les déplacements dudit organe de clapet étant limités par des premier et deuxième organes de butée de façon à permettre des variations de volume de la chambre de travail limitées à une deuxième amplitude δv telle que le rapport δv/ΔV soit inférieur à 20% au moins tant qu'on fait vibrer l'organe excitateur.

Grâce à ces dispositions, on réalise un découplage qui permet de diminuer la raideur dynamique du support antivibratoire à haute fréquence lorsque l'organe excitateur n'est pas actionné, notamment pendant le roulage du véhicule. Ce découplage est réalisé sans pénaliser la génération des contre-vibrations dans la chambre de travail par l'organe excitateur, puisque l'amplitude des variations de volume de la chambre de travail dues au clapet est très inférieure à l'amplitude des variations de volume dues à l'organe excitateur lorsque ledit organe excitateur est déplacé en mouvement alternatif pour générer des contre-vibrations (généralement lorsque le moteur du véhicule fonctionne au ralenti).

Dans des modes de réalisation préférés du procédé selon l'invention, on peut éventuellement avoir recours en outre à l'une et/ou à l'autre des dispositions suivantes :
- l'organe excitateur est déplaçable au moins entre une position de repos et une position de blocage, la deuxième amplitude δv ayant une première valeur tant que l'organe excitateur se trouve dans une première plage de positions relativement éloignée de sa position de blocage et une deuxième valeur lorsque l'organe excitateur se trouve dans sa position de blocage, la première valeur étant inférieure à la deuxième valeur ;
- la première valeur est égale à 0 ;
- la deuxième amplitude δv est constante (autrement dit, l'organe de clapet vibre entre deux butées fixes).

Par ailleurs, l'invention a également pour objet un support antivibratoire hydraulique actif pour la mise en oeuvre d'un procédé tel que défini ci-dessus, ce support étant destiné à être interposé entre deux éléments rigides et comportant :
- des première et deuxième armatures rigides destinées à être solidarisées respectivement avec les deux éléments rigides à réunir,
- un corps en élastomère qui relie entre elles les deux armatures et qui délimite partiellement une chambre de travail remplie de liquide,
- une paroi souple délimitant partiellement une chambre de compensation remplie de liquide, laquelle est reliée à la chambre de travail par un passage étranglé également rempli de liquide,
- une cloison rigide qui est solidaire de la deuxième armature et qui est interposée entre la chambre de travail et la chambre de compensation, cette cloison rigide comportant un premier ajutage,
- un organe excitateur qui obture le premier ajutage de la cloison rigide, cet organe excitateur présentant une première face qui communique avec le liquide contenu dans la chambre de travail et une deuxième face isolée de ladite chambre de travail, ledit organe excitateur étant monté mobile perpendiculairement à la cloison rigide au moins entre une position de repos et une position de blocage, ledit organe excitateur n'étant pas en contact avec la chambre de compensation et étant adapté pour générer des contre-vibrations dans la chambre de travail en créant des variations de volume de la chambre de travail présentant une première amplitude ΔV,
- et une liaison de commande adaptée pour relier l'organe excitateur à un dispositif de commande afin de commander les déplacements de l'organe excitateur,
caractérisé en ce que la cloison rigide est percée d'un deuxième ajutage qui est obturé par un organe de clapet déplaçable perpendiculairement à la cloison rigide, cet organe de clapet présentant une première face en contact avec le liquide contenu dans la chambre de travail et une deuxième face isolée de la chambre de travail, les déplacements dudit organe de clapet étant limités par des premier et deuxième organes de butée,
en ce que le deuxième organe de butée est lui-même déplaçable perpendiculairement à la cloison rigide entre d'une part, une position de repos où ledit deuxième organe de butée appuie sur l'organe de clapet afin de bloquer cet organe de clapet contre le premier organe de butée, et d'autre part, une position active où ledit deuxième organe de butée est plus éloigné du premier organe de butée et laisse un certain jeu à l'organe de clapet, en permettant des variations de volume de la chambre de travail limitées à une deuxième amplitude δv telle que le rapport δv/ΔV soit inférieur à 20 %,
en ce que le deuxième organe de butée est sollicité élastiquement vers sa position de repos,
et en ce que le deuxième organe de butée est relié à l'organe excitateur par l'intermédiaire d'une liaison mécanique à mouvement perdu qui est adaptée pour :
- permettre audit deuxième organe de butée de rester dans sa position de repos tant que l'organe excitateur se trouve dans une première plage de positions relativement éloignée de sa position de blocage,
- déplacer ledit deuxième organe de butée vers sa position active lorsque l'organe excitateur se trouve dans une deuxième plage de positions proche de sa position de blocage,
- et maintenir le deuxième organe de butée dans sa position active lorsque l'organe excitateur est dans sa position de blocage.

Dans des modes de réalisation préférés du support antivibratoire selon l'invention, on peut éventuellement avoir recours en outre à l'une et/ou à l'autre des dispositions suivantes :
- la deuxième face de l'organe excitateur communique avec une chambre pneumatique étanche qui comporte un raccord adapté pour être relié à une source pneumatique extérieure ;
- l'organe excitateur est une membrane souple qui est reliée de façon étanche à un boîtier, en délimitant avec celui-ci ladite chambre pneumatique ;
- le boîtier de la chambre pneumatique est contenu dans la chambre de compensation ;
- la membrane souple est réalisée en élastomère et comporte un bourrelet périphérique qui fait saillie vers la cloison rigide à partir du boîtier de la chambre pneumatique, ce bourrelet sollicitant élastiquement le deuxième organe de butée vers sa position de repos, et ledit bourrelet étant élastiquement compressible sous la poussée du deuxième organe de butée lorsque ledit deuxième organe de butée est déplacé de sa position de repos à sa position active ;
- la membrane souple est renforcée par une armature centrale qui comporte des doigts d'accrochage s'étendant vers la cloison rigide, lesdits doigt d'accrochage étant engagés avec jeu sur le deuxième organe de butée lorsque la membrane souple se trouve dans sa première plage de positions, et lesdits doigt d'accrochage comportant des crochets qui viennent en appui sur le deuxième organe de butée pour entraîner ce deuxième organe de butée vers sa position active lorsque la membrane souple se trouve dans sa deuxième plage de positions ;
- les doigts d'accrochage sont clipsés sur le deuxième organe de butée ;
- le premier ajutage est délimité par un conduit tubulaire s'étendant perpendiculairement à la cloison rigide entre une première extrémité qui débouche dans la chambre de travail et une deuxième extrémité qui communique avec l'organe excitateur, ce conduit tubulaire étant solidaire du deuxième organe de butée ;
- l'organe excitateur est une membrane souple qui est reliée de façon étanche à un boîtier en délimitant avec celui-ci ladite chambre pneumatique ;
- la membrane souple est renforcée par une armature centrale qui comporte des doigts d'accrochage s'étendant vers la cloison rigide, lesdits doigts d'accrochage comportant des crochets qui sont adaptés pour venir en appui sur un rebord solidaire du conduit tubulaire pour entraîner le deuxième organe de butée vers sa position active lorsque la membrane souple se trouve dans sa deuxième plage de positions ;
- le boîtier est constitué par un couvercle qui présente un fond et une paroi périphérique solidarisée avec la deuxième armature, la chambre pneumatique étant délimitée entre la membrane souple et le fond du couvercle, et la chambre de compensation étant disposée au voisinage de la cloison rigide, dans un espace intérieur délimité entre ladite cloison rigide et ledit couvercle ;
- le premier ajutage communique avec une chambre hydraulique intermédiaire remplie de liquide qui est délimitée entre la membrane souple et une couronne rigide fixée à l'intérieur du couvercle ;
- la couronne rigide présente un premier bord annulaire solidarisé rigidement avec le couvercle et un deuxième bord annulaire doté d'une lèvre d'étanchéité compressible en élastomère qui est en appui élastique étanche contre le deuxième organe de butée ;
- la deuxième face de l'organe de clapet communique avec la chambre de compensation ;
- le deuxième ajutage présente une forme annulaire et est disposé autour du premier ajutage, l'organe de clapet formant une rondelle qui est disposée dans le deuxième ajutage entre les premier et deuxième organes de butée ;
- la première face de l'organe excitateur communique avec la chambre de travail par l'intermédiaire d'un passage étranglé additionnel formé par ledit premier ajutage, qui est dimensionné pour présenter une fréquence de résonance comprise entre 10 et 90 Hz ;
- le passage étranglé additionnel est délimité entre une paroi fixe solidaire de la cloison rigide et une plaque rigide formant le deuxième organe de butée ;
- le corps en élastomère présente une paroi latérale en forme de cloche qui s'étend selon un axe central entre d'une part, un sommet solidaire de la première armature, et d'autre part, une base annulaire solidaire de la deuxième armature et de la cloison rigide, le sommet du corps en élastomère étant évidé de part et d'autre de la première armature au moins dans une direction radiale, de façon que ledit sommet forme un plot de cisaillement présentant une plus faible raideur que ladite paroi latérale dans ladite direction radiale ;
- une armature rigide intermédiaire est noyée dans le corps en élastomère entre le plot de cisaillement et la paroi latérale, cette armature intermédiaire entourant le plot de cisaillement en limitant les débattements radiaux de la première armature.

Par ailleurs, l'invention a également pour objet un véhicule automobile comportant :
- une caisse,
- un moteur supporté sur la caisse par au moins un support antivibratoire hydraulique tel que défini ci-dessus dans lequel la deuxième face de l'organe excitateur communique avec une chambre pneumatique,
- et une source de dépression reliée à la chambre pneumatique par l'intermédiaire d'un dispositif de commande qui est adapté pour :
   - faire varier cycliquement une pression de gaz régnant dans la chambre pneumatique de façon à faire générer des contre-vibrations dans la chambre de travail par l'organe excitateur lorsque le moteur du véhicule fonctionne à un régime de ralenti,
   - et mettre la chambre pneumatique en dépression permanente lorsque le moteur du véhicule fonctionne à un régime supérieur au régime de ralenti, en maintenant ainsi l'organe excitateur dans sa position de butée.

Enfin, l'invention a encore pour objet un véhicule automobile comportant :
- une caisse,
- un moteur,
- au moins un support antivibratoire hydraulique pour mettre en oeuvre un procédé tel que défini ci-dessus, ce support comportant :
   - des première et deuxième armatures rigides solidarisées l'une avec le moteur et l'autre avec la caisse,
   - un corps en élastomère qui relie entre elles les deux armatures et qui délimite partiellement une chambre de travail remplie d'un certain volume de liquide,
   - une paroi souple délimitant partiellement une chambre de compensation remplie de liquide, laquelle est reliée à la chambre de travail par un passage étranglé également rempli de liquide,
   - une cloison rigide qui est solidaire de la deuxième armature et qui est interposée entre la chambre de travail et la chambre de compensation, cette cloison rigide comportant un premier ajutage,
   - un organe excitateur qui obture le premier ajutage de la cloison rigide, cet organe excitateur présentant une première face qui communique avec le liquide contenu dans la chambre de travail et une deuxième face qui communique avec une chambre pneumatique, ledit organe excitateur étant monté mobile perpendiculairement à la cloison rigide entre une position de repos et une position de blocage,
- et une source de dépression reliée à la chambre pneumatique par l'intermédiaire d'un dispositif de commande qui est adapté pour :
   - faire varier cycliquement une pression de gaz régnant dans la chambre pneumatique pour faire vibrer l'organe excitateur en créant des variations de volume de la chambre de travail présentant une première amplitude ΔV afin de générer des contre-vibrations, lorsque le moteur véhicule fonctionne à un régime de ralenti,
   - et mettre la chambre pneumatique en dépression permanente lorsque le moteur du véhicule fonctionne à un régime supérieur au régime de ralenti, en maintenant ainsi l'organe excitateur dans sa position de blocage,
caractérisé en ce que la cloison rigide est percée d'un deuxième ajutage qui est obturé par un organe de clapet librement déplaçable perpendiculairement à la cloison rigide, cet organe de clapet présentant une première face en contact avec le liquide contenu dans la chambre de travail et une deuxième face isolée de la chambre de travail, les déplacements dudit organe de clapet étant limités par des premier et deuxième organes de butée de façon à permettre des variations de volume de la chambre de travail limitées à une deuxième amplitude δv constante, telle que le rapport δv/ΔV soit inférieur à 20%.

D'autres caractéristiques et avantages de l'invention apparaîtront au cours de la description suivante de trois de ses formes de réalisation, données à titre d'exemples non limitatifs, en regard des dessins joints.

Sur les dessins :
- la figure 1 est une vue schématique d'un véhicule automobile pouvant être équipé d'un support antivibratoire selon l'invention,
- et les figures 2 à 5 sont des vues en coupe verticale d'un support antivibratoire selon quatre formes de réalisation de l'invention, la membrane excitatrice du support antivibratoire étant représentée en position de repos sur la partie gauche de chaque figure et en position de butée sur la partie droite de chaque figure.

Sur les différentes figures, les mêmes références désignent des éléments identiques ou similaires.

Dans la description qui suit, les termes tels que "haut, bas, inférieur, supérieur, horizontal, vertical" sont utilisés dans le seul but d'améliorer la clarté de la description, en se référant à la position d'utilisation la plus habituelle du dispositif selon l'invention, mais ces termes ne sont pas limitatifs.

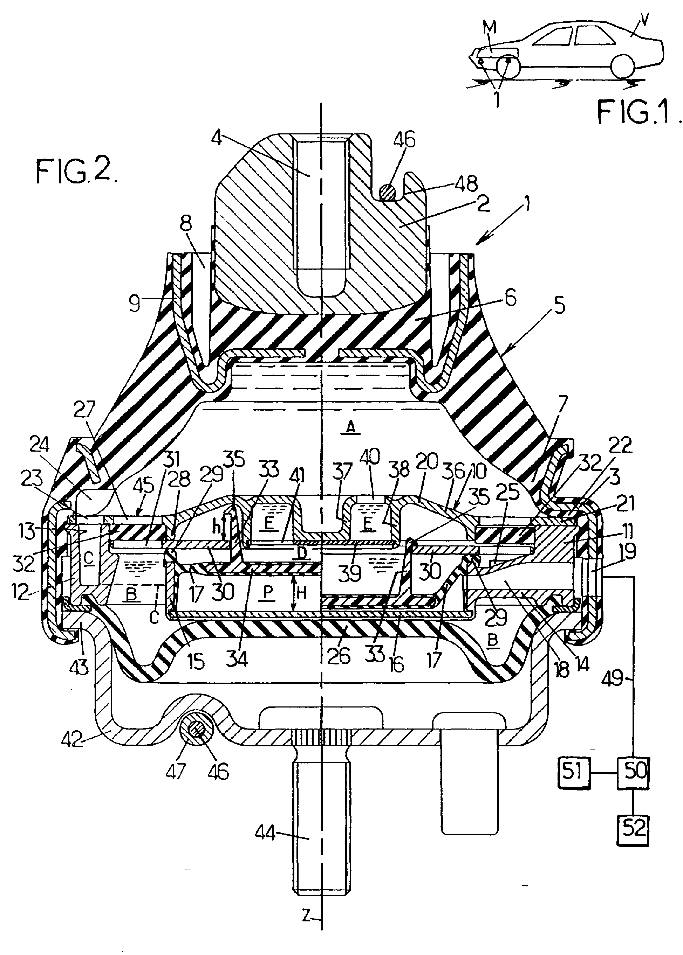

La figure 1 représente très schématiquement un véhicule automobile dont le moteur à combustion interne M est supporté sur la caisse V par l'intermédiaire de supports antivibratoires hydrauliques 1.

Selon une première forme de réalisation de l'invention, représentée sur la figure 2, le support antivibratoire hydraulique 1 comporte des première et deuxième armatures 2,3 qui sont destinées à être fixées respectivement au bloc motopropulseur M et à la caisse V.

Dans l'exemple considéré, la première armature 2 se présente sous la forme d'un plot qui est centré sur un axe vertical Z et qui est percé d'un trou fileté 4 permettant sa fixation au bloc motopropulseur M, tandis que la deuxième armature 3 est formée par une couronne d'acier également centrée sur l'axe Z.

Ces deux armatures 2,3 sont reliées entre elles par un corps en élastomère 5 relativement épais, qui présente une résistance à la compression suffisante pour reprendre les efforts statiques dus au poids du bloc motopropulseur. Ce corps en élastomère 5 présente une paroi latérale en forme de cloche qui s'étend entre un sommet 6 solidaire du plot 2, et une base annulaire 7 qui est solidaire de la couronne 3.

Avantageusement, le sommet 6 du corps en élastomère comporte un évidement annulaire 8 ouvert vers le haut et entourant le plot 2, ou éventuellement plusieurs évidements disposés angulairement autour du plot 2. Ainsi, le sommet 6 du corps en élastomère, qui porte le plot 2, forme un plot de cisaillement de plus faible raideur radiale que la paroi latérale du corps en élastomère, de sorte que le sommet 6 est découplé radialement du reste du corps en élastomère. On limite ainsi la transmission de vibrations radiales entre les armatures 2 et 3. Avantageusement, le corps en élastomère 5 est renforcé par une armature intermédiaire 9 qui se présente sous la forme d'une coupelle métallique rigide ouverte vers le haut qui est noyée dans ledit corps en élastomère, cette coupelle 9 étant disposée autour de la fente annulaire 8 et sous le plot 2. La coupelle 9 limite en outre les débattements radiaux du plot 2.

Par ailleurs, la deuxième armature 3 entoure une cloison rigide 10 qui délimite avec le corps en élastomère 5 une chambre de travail A remplie de liquide.

Dans l'exemple considéré ici, cette cloison 10 comporte un corps 11 moulé en alliage léger qui comprend lui-même :
- une couronne 12 centrée sur l'axe Z et dans laquelle est évidée une gorge 13 ouverte vers le haut qui s'étend angulairement sur une partie de la périphérie de la couronne 12,
- une tubulure 14 qui s'étend radialement vers l'intérieur à partir de la couronne 12,
- et une bague intérieure 15 qui est solidaire de l'extrémité intérieure de la tubulure 14, cette bague 15 pouvant le cas échéant être reliée en outre à la couronne 12 par des supports radiaux supplémentaires (non représentés) répartis sur la périphérie de ladite bague.

Le bord annulaire inférieur de la bague 15 est fixé par sertissage sur une paroi de fond 16 en formant un boîtier rigide, tandis qu'une membrane souple en élastomère 17 est fixée par adhérisation sur la périphérie intérieure de la bague 15, de façon à délimiter une chambre pneumatique P étanche qui communique uniquement avec un conduit d'air 18 formé par la tubulure 14 et débouchant vers l'extérieur du support antivibratoire à travers un trou 19 ménagé dans l'armature 3.

Par ailleurs, la cloison rigide 10 comporte en outre un couvercle 20, qui peut, comme le corps 11, être moulé en alliage léger, et qui recouvre ledit corps 11 en direction de la chambre de travail A.

Le couvercle 20 comporte une partie annulaire externe 21 pleine qui est appliquée en contact étanche contre un épaulement 22 formé par la base 7 du corps en élastomère et renforcé par la partie supérieure de la deuxième armature 3.

Cette partie annulaire externe 21 du couvercle 20 obture la partie supérieure de la gorge 13 ménagée dans le corps de la cloison rigide, de façon à délimiter avec cette gorge un passage étranglé C rempli de liquide, qui s'étend entre :
- d'une part, une première extrémité qui communique avec la chambre de travail A par l'intermédiaire d'un trou 23 ménagé dans la partie annulaire externe 21 du couvercle et par l'intermédiaire d'un évidement 24 ménagé dans la partie intérieure de la base 7 du corps en élastomère,
- et d'autre part, une deuxième extrémité qui débouche radialement vers l'intérieur de la couronne 12 par l'intermédiaire d'un évidement 25 ménagé dans cette couronne de façon à communiquer avec une chambre de compensation B remplie de liquide, laquelle chambre de compensation est délimitée entre la cloison rigide 10 et une paroi souple en élastomère 26 en forme de soufflet, disposée sous la cloison 10.

Par ailleurs, le couvercle 20 comporte en outre, radialement vers l'intérieur du rebord annulaire 21, une grille annulaire 27 formée par une série de trous répartis angulairement autour de l'axe Z. Au niveau de la périphérie intérieure de la grille 27, le couvercle présente une couronne 28 centrée sur l'axe Z, qui fait saillie axialement vers le bas en regard d'un bourrelet annulaire 28 appartenant à la membrane 17 en élastomère, lequel bourrelet 29 fait saillie axialement vers le haut.

Entre la couronne 28 et le bourrelet 29 est disposée une plaque mobile 30 rigide qui présente une forme annulaire centrée sur l'axe Z et s'étend dans un plan perpendiculaire audit axe Z. La plaque mobile 30 comporte, à sa périphérie extérieure, une série de trous axiaux qui sont répartis angulairement et qui forment une grille 31 disposée en regard de la grille 27 susmentionnée. Ces grilles 27,31 forment un ajutage annulaire 45 qui est obturé par un clapet 32, formé par une rondelle en élastomère qui se trouve emprisonnée axialement entre les grilles 27 et 31.

Dans la position de repos du support antivibratoire, comme représenté sur la partie gauche de la figure 1, le bourrelet 29 en élastomère applique la plaque mobile 30 contre la couronne 28 du couvercle et contre le clapet 32, en immobilisant le clapet entre les grilles 27 et 31.

De plus, à la périphérie intérieure de la plaque mobile 30 sont clipsés des doigts d'accrochage axiaux 33 qui sont répartis angulairement sur ladite périphérie intérieure et qui sont formés d'une seule pièce avec une plaque plane en matière plastique 34 ou une autre armature noyée dans la partie centrale de la membrane 17.

Chaque doigt d'accrochage 33 comporte à son extrémité supérieure un crochet 35 faisant saillie radialement vers l'extérieur, lequel crochet est disposé à une certaine hauteur h au-dessus de la plaque mobile 30 lorsque le support antivibratoire est dans sa position de repos représentée sur la partie gauche de la figure 1. Cette hauteur h est inférieure à la hauteur H qui sépare la membrane 17 de la paroi de fond 16 de la chambre pneumatique P.

Les doigts d'accrochage 35 sont reçus dans une partie centrale surélevée 36 du couvercle 20 de la cloison rigide. Cette partie intérieure surélevée comporte en son centre une couronne 37 centrée sur l'axe Z, dans laquelle est ménagée une gorge 38 ouverte vers le bas. De plus, l'extrémité inférieure de la couronne 37 est sertie sur une plaque de fermeture 39 qui délimite avec la gorge 38 un passage étranglé E s'étendant selon un arc de cercle centré sur l'axe Z, entre :
- d'une part, une première extrémité qui communique avec la chambre de travail A par un orifice 40 ménagé dans le couvercle 20,
- et d'autre part, une deuxième extrémité qui communique avec une chambre intermédiaire D ménagée entre la membrane 17 et la cloison rigide 10, cette communication se faisant par un orifice 41 ménagé dans la plaque de fermeture 39.

Enfin, un boîtier en tôle 42 vient compléter le support antivibratoire en recouvrant la paroi souple 26 vers le bas, la périphérie 43 de ce boîtier étant appliquée contre la périphérie de la paroi souple 26 qui est elle-même en appui sous la couronne 12 du corps de la cloison rigide 10, et le bord inférieur de la deuxième armature 3 étant serti sous le rebord extérieur 43 du boîtier de façon à solidariser l'ensemble du support antivibratoire.

Le fond du boîtier 42 comporte des moyens de fixation, comprenant notamment un goujon 44 pour fixer ledit boîtier sur la caisse V du véhicule, en solidarisant ainsi la deuxième armature 3 avec ladite caisse.

Avantageusement, un limiteur de course, tel qu'un cordon inextensible 46 formé en boucle et passé dans des gorges 47,48 ménagées respectivement sous le boîtier 42 et sur le plot 2, permet de limiter les débattements relatifs des armatures 2,3, parallèlement à l'axe Z.

Enfin, le passage d'air 14 est relié à un circuit pneumatique extérieur 49 qui est adapté pour communiquer soit avec le circuit d'admission d'air 52 du moteur, soit avec l'atmosphère. La mise en communication du circuit 49 avec le circuit d'admission 52 ou avec l'atmosphère est réalisée par l'intermédiaire d'une électrovanne 50 à trois voies commandées par un circuit de contrôle 51 tel que le calculateur de bord du véhicule, ou autre.

Le support antivibratoire qui vient d'être décrit fonctionne comme suit.

Lorsque le véhicule dans lequel est installé le support antivibratoire ne fonctionne pas, ce support reste dans la position de repos représentée sur la partie gauche de la figure 1.

Lorsque le moteur du véhicule est démarré et fonctionne au ralenti, en générant ainsi au niveau du plot 2 des mouvements vibratoires qui présentent généralement une fréquence comprise entre 20 et 80 Hz, voire entre 10 et 90 Hz, la chambre pneumatique P est alternativement mise en dépression et à la pression atmosphérique, par l'électrovanne 50 commandée par le calculateur 51. Il en résulte des mouvements vibratoires de la membrane flexible 17, et ces mouvements vibratoires émettent dans la chambre intermédiaire D des contre-vibrations visant à neutraliser les effets des vibrations du moteur.

Ces contre-vibrations sont optimisées par le calculateur 51 selon un programme prédéterminé, en fonction du régime du moteur et de divers paramètres pouvant influer sur les vibrations de ralenti (fonctionnement de la climatisation, consommation d'électricité, température du moteur, etc.) en agissant par exemple sur les paramètres suivants :
- l'amplitude des vibrations de la membrane 17 qui est contrôlée en agissant sur le rapport cyclique du signal envoyé à l'électrovanne 50 (rapport entre le temps pendant lequel l'électrovanne 50 met la chambre pneumatique P en dépression et la durée totale d'une période de vibrations),
- la phase des vibrations de la membrane 17, contrôlée en agissant sur l'instant initial de chaque cycle d'actionnement de l'électrovanne 50 par rapport à la rotation du moteur, laquelle rotation est repérée par exemple par le passage d'un cylindre donné à son point mort haut.

Les contre-vibrations ainsi émises par la membrane 17 dans la chambre intermédiaire D sont transmises à la chambre de travail A par l'intermédiaire du passage étranglé E, lequel passage étranglé est dimensionné de façon à présenter une fréquence de résonance située par exemple dans la plage allant de 10 à 90 Hz, et correspondant sensiblement à la fréquence du ralenti.

La présence du passage étranglé E permet ainsi, d'une part, d'amplifier les contre-vibrations émises par la membrane 17, et d'autre part, de filtrer les harmoniques supérieurs des vibrations, d'où une commande plus simple de l'électrovanne 50.

Lorsque le moteur fonctionne au ralenti, l'amplitude des vibrations auxquelles est soumise la membrane 17 est telle que la membrane se déplace d'une hauteur inférieure à la hauteur h susmentionnée par rapport à sa position de repos, au moins la majeure partie du temps, de sorte que le clapet 32 reste bloqué et ne gêne pas l'effet desdites contre-vibrations.

Au contraire, lorsque le véhicule roule, l'électrovanne 50 est actionnée de façon à mettre la chambre pneumatique P en dépression permanente, comme représenté sur la partie droite de la figure 1. Il en résulte que la membrane souple 17 se plaque sensiblement contre la paroi de fond 16. Dans cette position de butée, les crochets 35 des doigts d'accrochage 33 entraînent la paroi mobile 30 vers le bas en écrasant le bourrelet annulaire 29, ce qui donne un faible jeu vertical au clapet 32, ce jeu étant typiquement de l'ordre de 0,5 à 1 mm.

Ainsi, pendant le roulage du véhicule, le clapet 32 assure un découplage axial entre les armatures 2 et 3 vis-à-vis des vibrations de haute fréquence et de faible amplitude (par exemple, fréquence supérieure à 20 Hz ou à 50 Hz et amplitude inférieure à 1 mm), tandis que le passage étranglé C est dimensionné pour représenter une fréquence de résonance généralement inférieure à 20 Hz, de façon à amortir les mouvements de hachis, de relativement faible fréquence (par exemple, inférieure à 20 Hz) et de relativement grande amplitude (par exemple, supérieure à 1 mm) générés par le roulage du véhicule.

On notera qu'il serait possible de supprimer la chambre intermédiaire D et le passage étranglé E sans sortir du cadre de la présente invention, la membrane 17 communiquant alors directement avec la chambre de travail A.

Par ailleurs, il serait également possible de remplacer ladite membrane 17 par tout autre organe excitateur, tel qu'un piston ou similaire. De plus, la commande de la membrane 17 ou d'un autre organe excitateur est de préférence réalisée par voie pneumatique, comme indiqué ci-dessus, mais pourrait éventuellement être réalisée par voie électromécanique et/ou électromagnétique sans pour autant sortir du cadre de l'invention.

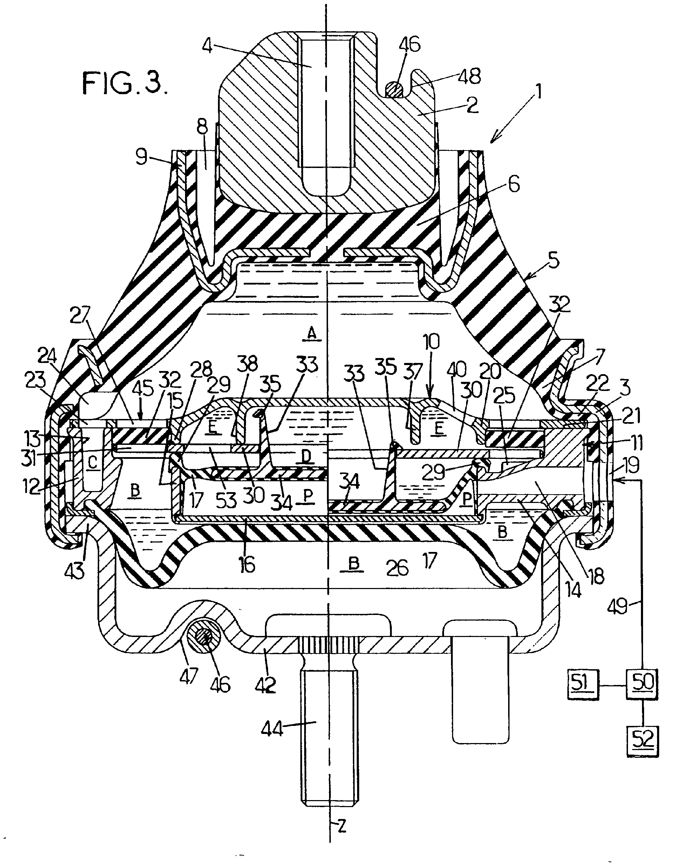

La deuxième forme de réalisation de l'invention, qui est représentée sur la figure 3, présente une structure et un fonctionnement très similaires à la structure et au fonctionnement de la première forme de réalisation de l'invention, de sorte que ladite deuxième forme de réalisation ne sera pas décrite en détail ici.

Ce deuxième mode de réalisation de l'invention se différencie simplement du premier mode en ce que :
- la plaque de fermeture 39 est supprimée,
- la partie centrale 36 du couvercle délimite un espace inférieur creux situé au centre de la couronne 38, qui accueille les doigts d'accrochage 33,
- la plaque mobile 30 coopère avec le couvercle 20 de la cloison rigide pour délimiter le passage étranglé E lorsque ladite plaque mobile 30 est dans sa position de repos, la plaque mobile comportant un orifice 53 qui fait communiquer le passage étranglé E avec la chambre intermédiaire D (le contact entre le couvercle 20 et la plaque mobile 30 n'est plus étanche lorsque le véhicule est en situation de roulage, comme représenté sur la partie droite de la figure 2, mais cela n'a pas d'importance, puisqu'il n'y a alors plus ou quasiment plus d'échange de liquide entre la chambre intermédiaire D et la chambre de travail A).

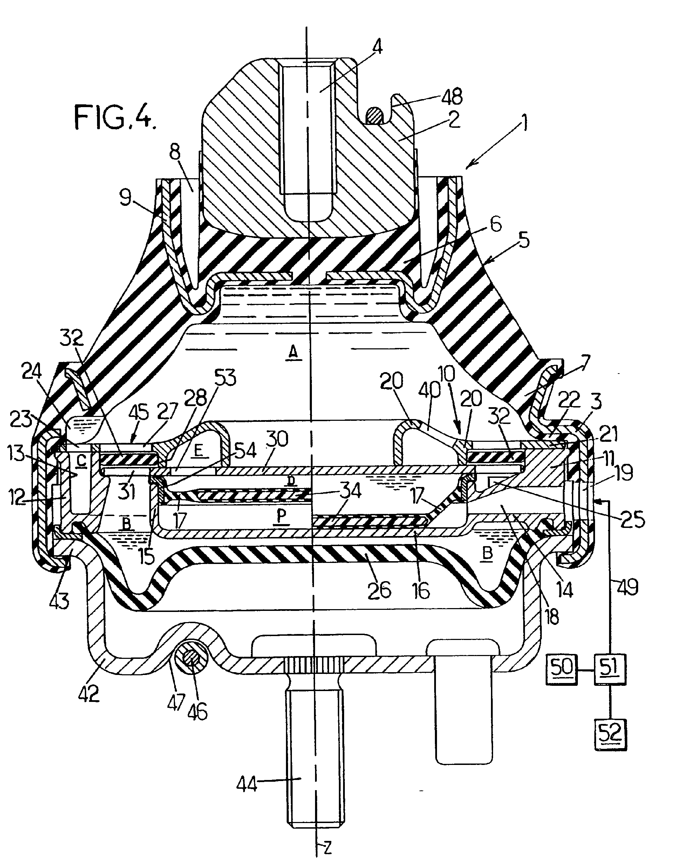

La troisième forme de réalisation de l'invention, qui est représentée sur la figure 4, est similaire à la deuxième forme de réalisation décrite précédemment, de sorte que cette troisième forme de réalisation ne sera pas décrite à nouveau en détail.

Cette troisième forme de réalisation de l'invention se différencie de la deuxième forme de réalisation par les points suivants :
- la plaque 30 est immobilisée axialement par serrage rigide entre la couronne 28 et une armature rigide 54 qui renforce le pourtour de la membrane 17, laquelle membrane n'est plus adhérisée sur la couronne 15 mais simplement tenue par serrage axial de l'armature 54 entre la couronne 15 et la plaque 30,
- la membrane 17 ne comporte plus le bourrelet élastique 29 décrit précédemment,
- le clapet 32 est monté avec un jeu permanent entre les grilles 27 et 31, ce jeu étant suffisamment limité pour que l'amplitude δv des variations de volume de la chambre de travail A générées par les vibrations du clapet 32 ne dépasse pas 20% de l'amplitude ΔV des variations de volume de la chambre de travail générées par les vibrations de la membrane 17 lorsque le moteur fonctionne au ralenti, de sorte que le clapet 32 ne perturbe que de façon très limitée les contre-vibrations émises par ladite membrane 17,
- l'armature 34 de la membrane 17 ne comporte plus les doigts d'accrochage 33,
- et accessoirement, le fond 16 est formé d'une seule pièce avec la couronne 15 pour former le boîtier qui délimite la chambre pneumatique P.

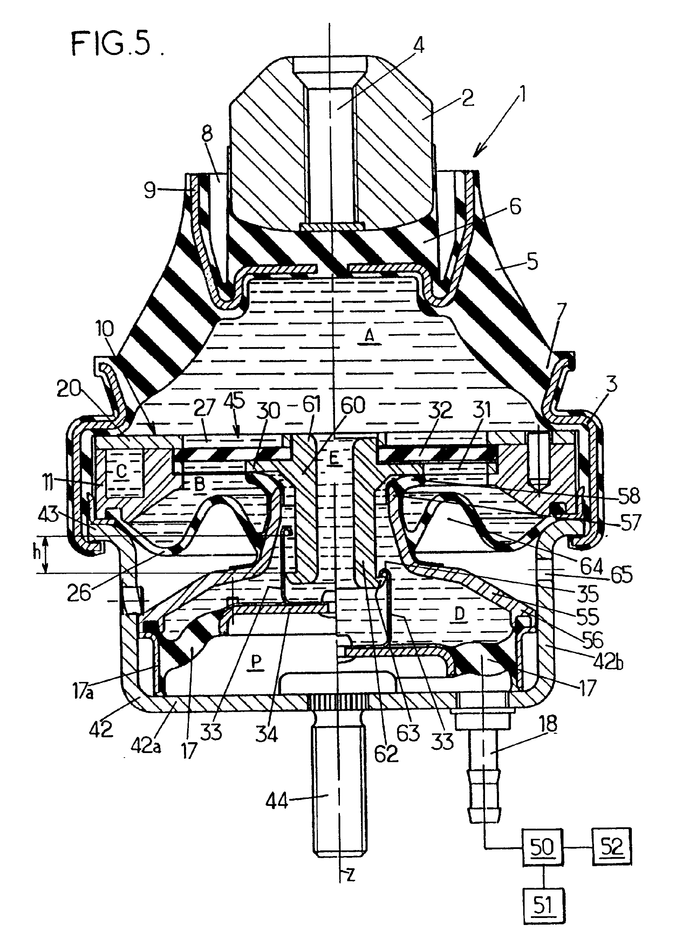

Enfin, la quatrième forme de réalisation de l'invention, représentée sur la figure 5, est également similaire aux différentes formes de réalisation décrites précédemment, et s'en distingue par les points suivants :
- la chambre pneumatique P est délimitée entre le fond 42a du boîtier ou couvercle 42 et la membrane 17 en élastomère, laquelle membrane peut avantageusement être pourvue à sa périphérie extérieure d'une couronne de renfort rigide 17a emboîtée à force dans le boîtier 42,
- la plaque centrale de renfort 34 de la membrane 17, ainsi que les pattes 33 de cette plaque 34 peuvent être réalisées par exemple en métal (bien entendu, la plaque 34 et les pattes 33 pourraient être réalisées en matière plastique dans cette forme de réalisation, et ces éléments pourraient être réalisés en métal dans les formes de réalisation précédemment décrites),
- dans la paroi latérale annulaire 42b du couvercle 42 est emboîtée à force une couronne rigide 55, réalisée par exemple en alliage léger ou en matière plastique, cette couronne 55 présentant un bord annulaire inférieur 56 emboîté dans ladite paroi latérale 42b et en appui sur la périphérie extérieure de la membrane 17, et un bord annulaire supérieur 57 de plus petit diamètre qui est disposé au voisinage de la cloison rigide 10 et qui présente une lèvre compressible 58 en élastomère disposée en appui étanche contre la plaque mobile 30 décrite précédemment,
- la paroi souple 26 qui délimite la chambre de compensation B présente une forme annulaire, avec un bord périphérique intérieur adhérisé sur la couronne 55,
- la plaque mobile 30 susmentionnée est solidarisée avec un tube 60 qui délimite intérieurement le passage étranglé ou ajutage E et qui s'étend entre une extrémité supérieure 61 communiquant avec la chambre de travail A et une extrémité inférieure 62 communiquant avec la chambre hydraulique intermédiaire D, l'extrémité inférieure 62 du tube 60 présentant une collerette extérieure 63 engagée entre les pattes 33 susmentionnées, les crochets 35 formés par ces pattes 33 étant adaptés pour venir en butée contre la collerette 63 en entraînant le tube 60 et la plaque mobile 30 vers le bas lorsque la chambre pneumatique P est mise en dépression permanente, ce qui comprime la lèvre 58 en élastomère en libérant le clapet de découplage 32, qui peut ainsi vibrer librement entre la plaque mobile 30 et le couvercle 20 de la cloison rigide 10, lequel couvercle 20 peut être ici constitué par une simple plaque de tôle découpée,
- un espace libre 64 rempli d'air est délimité entre la paroi souple 26 et la couronne 55, cet espace communiquant avec l'atmosphère par l'intermédiaire d'un ou plusieurs trous 65 percés dans la paroi latérale 42b.

Dans cette quatrième forme de réalisation, le clapet de découplage 32 peut présenter une surface relativement importante, ce qui permet une excellente efficacité du filtrage acoustique à haute fréquence. De plus, la membrane 17 peut elle-même présenter une surface relativement importante, ce qui permet de générer une force importante lorsque la chambre P est mise en dépression.

## Revendications

1. Procédé pour atténuer des vibrations entre deux éléments rigides (M, V) en interposant entre ces éléments un support antivibratoire hydraulique actif (1) comportant :
- des première et deuxième armatures rigides (2, 3) solidarisées respectivement avec les deux éléments rigides à réunir,
- un corps en élastomère (5) qui relie entre elles les deux armatures (2, 3) et qui délimite partiellement une chambre de travail (A) remplie d'un certain volume de liquide,
- une paroi souple (26) délimitant partiellement une chambre de compensation (B) remplie de liquide, laquelle est reliée à la chambre de travail (A) par un passage étranglé (C) également rempli de liquide,
- une cloison rigide (10) qui est solidaire de la deuxième armature (3) et qui est interposée entre la chambre de travail (A) et la chambre de compensation (B), cette cloison rigide comportant un premier ajutage (E),
- un organe excitateur (17) qui obture le premier ajutage de la cloison rigide, cet organe excitateur présentant une première face qui communique avec le liquide contenu dans la chambre de travail et une deuxième face isolée de ladite chambre de travail, ledit organe excitateur étant monté mobile perpendiculairement à la cloison rigide (10),
procédé dans lequel on fait vibrer l'organe excitateur en créant des variations de volume de la chambre de travail présentant une première amplitude ΔV pour générer des contre-vibrations,
procédé **caractérisé en ce qu'**on utilise un support antivibratoire dont la cloison rigide (10) est percée d'un deuxième ajutage (45) qui est obturé par un organe de clapet (32) librement déplaçable perpendiculairement à la cloison rigide (10), cet organe de clapet présentant une première face en contact avec le liquide contenu dans la chambre de travail (A) et une deuxième face isolée de la chambre de travail, les déplacements dudit organe de clapet étant limités par des premier et deuxième organes de butée (20, 30) de façon à permettre des variations de volume de la chambre de travail limitées à une deuxième amplitude δv telle que le rapport δv/ΔV soit inférieur à 20% au moins tant qu'on fait vibrer l'organe excitateur.

2. Procédé selon la revendication 1, dans lequel l'organe excitateur est déplaçable au moins entre une position de repos et une position de blocage, la deuxième amplitude δv ayant une première valeur tant que l'organe excitateur (17) se trouve dans une première plage de positions relativement éloignée de sa position de blocage et une deuxième valeur lorsque l'organe excitateur se trouve dans sa position de blocage, la première valeur étant inférieure à la deuxième valeur.

3. Procédé selon la revendication 2, dans lequel la première valeur est égale à 0.

4. Procédé selon la revendication 1, dans lequel la deuxième amplitude δv est constante.

5. Support antivibratoire hydraulique actif pour la mise en oeuvre d'un procédé selon la revendication 2 ou la revendication 3, ce support étant destiné à être interposé entre deux éléments rigides (M, V) et comportant :
- des première et deuxième armatures rigides (2, 3) destinées à être solidarisées respectivement avec les deux éléments rigides à réunir,
- un corps en élastomère (5) qui relie entre elles les deux armatures (2, 3) et qui délimite partiellement une chambre de travail (A) remplie de liquide,
- une paroi souple (26) délimitant partiellement une chambre de compensation (B) remplie de liquide, laquelle est reliée à la chambre de travail (A) par un passage étranglé (C) également rempli de liquide,
- une cloison rigide (10) qui est solidaire de la deuxième armature (3) et qui est interposée entre la chambre de travail (A) et la chambre de compensation (B), cette cloison rigide comportant un premier ajutage (E),
- un organe excitateur (17) qui obture le premier ajutage de la cloison rigide, cet organe excitateur présentant une première face qui communique avec le liquide contenu dans la chambre de travail et une deuxième face isolée de ladite chambre de travail, ledit organe excitateur étant monté mobile perpendiculairement à la cloison rigide (10) au moins entre une position de repos et une position de blocage, ledit organe excitateur (17) n'étant pas en contact avec la chambre de compensation (B) et étant adapté pour générer des contre-vibrations dans la chambre de travail (A) en créant des variations de volume de la chambre de travail présentant une première amplitude ΔV,
- et une liaison de commande (18) adaptée pour relier l'organe excitateur (17) à un dispositif de commande (50) afin de commander les déplacements de l'organe excitateur,
**caractérisé en ce que** la cloison rigide (10) est percée d'un deuxième ajutage (45) qui est obturé par un organe de clapet (32) déplaçable perpendiculairement à la cloison rigide (10), cet organe de clapet présentant une première face en contact avec le liquide contenu dans la chambre de travail (A) et une deuxième face isolée de la chambre de travail, les déplacements dudit organe de clapet étant limités par des premier et deuxième organes de butée (20, 30),
**en ce que** le deuxième organe de butée (30) est lui-même déplaçable perpendiculairement à la cloison rigide (10) entre d'une part, une position de repos où ledit deuxième organe de butée appuie sur l'organe de clapet (32) afin de bloquer cet organe de clapet contre le premier organe de butée (20), et d'autre part, une position active où ledit deuxième organe de butée (30) est plus éloigné du premier organe de butée (20) et laisse un certain jeu à l'organe de clapet (32), en permettant des variations de volume de la chambre de travail limitées à une deuxième amplitude δv telle que le rapport δv/ΔV soit inférieur à 20 %,
**en ce que** le deuxième organe de butée (30) est sollicité élastiquement vers sa position de repos,
et **en ce que** le deuxième organe de butée (30) est relié à l'organe excitateur (17) par l'intermédiaire d'une liaison mécanique à mouvement perdu (33) qui est adaptée pour :
. permettre audit deuxième organe de butée (30) de rester dans sa position de repos tant que l'organe excitateur (17) se trouve dans une première plage de positions relativement éloignée de sa position de blocage,
. déplacer ledit deuxième organe de butée vers sa position active lorsque l'organe excitateur se trouve dans une deuxième plage de positions proche de sa position de blocage,
. et maintenir le deuxième organe de butée dans sa position active lorsque l'organe excitateur est dans sa position de blocage.

6. Support antivibratoire selon la revendication 5, dans lequel la deuxième face de l'organe excitateur (17) communique avec une chambre pneumatique étanche (P) qui comporte un raccord (18) adapté pour être relié à une source pneumatique extérieure (52).

7. Support antivibratoire selon la revendication 6, dans lequel l'organe excitateur (17) est une membrane souple qui est reliée de façon étanche à un boîtier (15, 16), en délimitant avec celui-ci ladite chambre pneumatique (P).

8. Support antivibratoire selon la revendication 7, dans lequel le boîtier (15, 16) de la chambre pneumatique (P) est contenu dans la chambre de compensation (B).

9. Support antivibratoire selon la revendication 7 ou la revendication 8, dans lequel la membrane souple (17) est réalisée en élastomère et comporte un bourrelet périphérique (29) qui fait saillie vers la cloison rigide (10) à partir du boîtier (15, 16) de la chambre pneumatique, ce bourrelet sollicitant élastiquement le deuxième organe de butée (30) vers sa position de repos, et ledit bourrelet étant élastiquement compressible sous la poussée du deuxième organe de butée (30) lorsque ledit deuxième organe de butée est déplacé de sa position de repos à sa position active.

10. Support antivibratoire selon l'une quelconque des revendications 7 à 9, dans lequel la membrane souple (17) est renforcée par une armature centrale (34) qui comporte des doigts d'accrochage (33) s'étendant vers la cloison rigide (10), lesdits doigt d'accrochage étant engagés avec jeu sur le deuxième organe de butée (30) lorsque la membrane souple se trouve dans sa première plage de positions, et lesdits doigt d'accrochage comportant des crochets (35) qui viennent en appui sur le deuxième organe de butée (30) pour entraîner ce deuxième organe de butée vers sa position active lorsque la membrane souple (17) se trouve dans sa deuxième plage de positions.

11. Support antivibratoire selon la revendication 10, dans lequel les doigts d'accrochage (33) sont clipsés sur le deuxième organe de butée (30).

12. Support antivibratoire selon la revendication 5, dans lequel le premier ajutage (E) est délimité par un conduit tubulaire (60) s'étendant perpendiculairement à la cloison rigide (10) entre une première extrémité (61) qui débouche dans la chambre de travail et une deuxième extrémité (62) qui communique avec l'organe excitateur (17), ce conduit tubulaire (60) étant solidaire du deuxième organe de butée (30).

13. Support antivibratoire selon la revendication 12, dans lequel l'organe excitateur (17) est une membrane souple qui est reliée de façon étanche à un boîtier (42) en délimitant avec celui-ci ladite chambre pneumatique (P).

14. Support antivibratoire selon la revendication 13, dans lequel la membrane souple (17) est renforcée par une armature centrale (34) qui comporte des doigts d'accrochage (33) s'étendant vers la cloison rigide (10), lesdits doigts d'accrochage comportant des crochets (35) qui sont adaptés pour venir en appui sur un rebord (63) solidaire du conduit tubulaire (60) pour entraîner le deuxième organe de butée (30) vers sa position active lorsque la membrane souple (17) se trouve dans sa deuxième plage de positions.

15. Support antivibratoire selon la revendication 13 ou la revendication 14, dans lequel le boîtier (42) est constitué par un couvercle qui présente un fond (42a) et une paroi périphérique (42b) solidarisée avec la deuxième armature (3), la chambre pneumatique (P) étant délimitée entre la membrane souple (17) et le fond (42a) du couvercle, et la chambre de compensation (B) étant disposée au voisinage de la cloison rigide (10), dans un espace intérieur délimité entre ladite cloison rigide et ledit couvercle.

16. Support antivibratoire selon la revendication 15, dans lequel le premier ajutage (E) communique avec une chambre hydraulique intermédiaire (D) remplie de liquide qui est délimitée entre la membrane souple (17) et une couronne rigide (55) fixée à l'intérieur du couvercle (42).

17. Support antivibratoire selon la revendication 16, dans lequel la couronne rigide (55) présente un premier bord annulaire (56) solidarisé rigidement avec le couvercle (42) et un deuxième bord annulaire (57) doté d'une lèvre d'étanchéité compressible (58) en élastomère qui est en appui élastique étanche contre le deuxième organe de butée.

18. Support antivibratoire selon l'une quelconque des revendications 5 à 17, dans lequel la deuxième face de l'organe de clapet (32) communique avec la chambre de compensation (B).

19. Support antivibratoire selon l'une quelconque des revendications 5 à 18, dans lequel le deuxième ajutage (45) présente une forme annulaire et est disposé autour du premier ajutage (E), l'organe de clapet formant une rondelle qui est disposée dans le deuxième ajutage entre les premier et deuxième organes de butée (20, 30).

20. Support antivibratoire selon l'une quelconque des revendications 5 à 19, dans lequel la première face de l'organe excitateur (17) communique avec la chambre de travail (A) par l'intermédiaire d'un passage étranglé additionnel (E) formé par ledit premier ajutage qui est dimensionné pour présenter une fréquence de résonance comprise entre 10 et 90 Hz.

21. Support antivibratoire selon la revendication 20, dans lequel le passage étranglé additionnel (E) est délimité entre une paroi fixe (20) solidaire de la cloison rigide (10) et une plaque rigide (30) formant le deuxième organe de butée.

22. Support antivibratoire selon l'une quelconque des revendications 5 à 21, dans lequel le corps en élastomère (5) présente une paroi latérale en forme de cloche qui s'étend selon un axe central (Z) entre d'une part, un sommet (6) solidaire de la première armature (2), et d'autre part, une base annulaire (7) solidaire de la deuxième armature (3) et de la cloison rigide (10), le sommet (6) du corps en élastomère étant évidé de part et d'autre de la première armature au moins dans une direction radiale, de façon que ledit sommet forme un plot de cisaillement présentant une plus faible raideur que ladite paroi latérale dans ladite direction radiale.

23. Support antivibratoire selon la revendication 22, dans lequel une armature rigide intermédiaire (9) est noyée dans le corps en élastomère entre le plot de cisaillement (6) et la paroi latérale, cette armature intermédiaire entourant le plot de cisaillement en limitant les débattements radiaux de la première armature (2).

24. Véhicule automobile comportant :
- une caisse (V),
- un moteur (M) supporté sur la caisse par au moins un support antivibratoire hydraulique (1) selon l'une quelconque des revendications 5 à 23 dans lequel la deuxième face de l'organe excitateur (17) communique avec une chambre pneumatique (P),
- et une source de dépression (52) reliée à la chambre pneumatique par l'intermédiaire d'un dispositif de commande (50, 51) qui est adapté pour :
. faire varier cycliquement une pression de gaz régnant dans la chambre pneumatique (P) de façon à faire générer des contre-vibrations dans la chambre de travail par l'organe excitateur (17) lorsque le moteur (M) véhicule fonctionne à un régime de ralenti,
. et mettre la chambre pneumatique (P) en dépression permanente lorsque le moteur du véhicule fonctionne à un régime supérieur au régime de ralenti, en maintenant ainsi l'organe excitateur (17) dans sa position de blocage.

25. Véhicule automobile comportant :
- une caisse (V),
- un moteur (M),
- au moins un support antivibratoire hydraulique (1) pour mettre en oeuvre un procédé selon la revendication 4, ce support comportant :
. des première et deuxième armatures rigides (2, 3) solidarisées l'une avec le moteur (M) et l'autre avec la caisse (V),
. un corps en élastomère (5) qui relie entre elles les deux armatures (2, 3) et qui délimite partiellement une chambre de travail (A) remplie d'un certain volume de liquide,
. une paroi souple (26) délimitant partiellement une chambre de compensation (B) remplie de liquide, laquelle est reliée à la chambre de travail (A) par un passage étranglé (C) également rempli de liquide,
. une cloison rigide (10) qui est solidaire de la deuxième armature (3) et qui est interposée entre la chambre de travail (A) et la chambre de compensation (B), cette cloison rigide comportant un premier ajutage (E),
. un organe excitateur (17) qui obture le premier ajutage de la cloison rigide, cet organe excitateur présentant une première face qui communique avec le liquide contenu dans la chambre de travail et une deuxième face qui communique avec une chambre pneumatique (P), ledit organe excitateur étant monté mobile perpendiculairement à la cloison rigide (10) entre une position de repos et une position de blocage,
- et une source de dépression (52) reliée à la chambre pneumatique par l'intermédiaire d'un dispositif de commande (50, 51) qui est adapté pour :
. faire varier cycliquement une pression de gaz régnant dans la chambre pneumatique (P) pour faire vibrer l'organe excitateur (17) en créant des variations de volume de la chambre de travail présentant une première amplitude ΔV afin de générer des contre-vibrations, lorsque le moteur (M) véhicule fonctionne à un régime de ralenti,
. et mettre la chambre pneumatique (P) en dépression permanente lorsque le moteur du véhicule fonctionne à un régime supérieur au régime de ralenti, en maintenant ainsi l'organe excitateur (17) dans sa position de blocage,
**caractérisé en ce que** la cloison rigide (10) est percée d'un deuxième ajutage (45) qui est obturé par un organe de clapet (32) librement déplaçable perpendiculairement à la cloison rigide (10), cet organe de clapet présentant une première face en contact avec le liquide contenu dans la chambre de travail (A) et une deuxième face isolée de la chambre de travail, les déplacements dudit organe de clapet étant limités par des premier et deuxième organes de butée (20, 30) de façon à permettre des variations de volume de la chambre de travail limitées à une deuxième amplitude δv constante, telle que le rapport δv/ΔV soit inférieur à 20%.

## Claims

1. Method of damping vibrations between two rigid elements (M, V) by interposing between these elements an active hydraulic anti-vibration mount (1) comprising:
- first and second rigid support elements (2, 3) integrated respectively with the two rigid elements to be connected,
- an elastomer body (5) linking the two support elements (2, 3) and partially delimiting a working chamber (A) filled with a certain volume of liquid,
- a flexible wall (26) partially delimiting a compensation chamber (B) filled with liquid, which chamber is linked to the working chamber (A) by a throttled passage (C) also filled with liquid,
- a rigid partition (10) integral with the second support element (3) and interposed between the working chamber (A) and the compensation chamber (B), this rigid partition including a first regulating nozzle (E),
- an exciting device (17) which closes the first regulating nozzle of the rigid partition, this exciting device having a first face communicating with the liquid contained in the working chamber and a second face isolated from said working chamber, said exciting device being so mounted as to be movable perpendicularly to the rigid partition (10),
a method in which the exciting device is caused to vibrate, creating variations in the volume of the working chamber with a first amplitude ΔV in order to generate counter-vibrations,
a process **characterized in that** an anti-vibration mount is used the rigid partition (10) of which is penetrated by a second regulating nozzle (45) which is closed by a valve device (32) freely movable perpendicularly to the rigid partition (10), this valve device having a first face in contact with the liquid contained in working chamber (A) and a second face isolated from the working chamber, the movements of said valve device being limited by first and second stop devices (20, 30) so as to permit variations in the volume of the working chamber limited to a second amplitude δv such that the relationship δv/ΔV is less than 20% at least while the exciting device is being vibrated.

2. Method according to Claim 1, in which the exciting device is movable at least between the rest position and a blocked position, the second amplitude δV having a first value while the exciting device (17) is in a first range of positions relatively distant from its blocked position and a second value when the exciting device is in its blocked position, the first value being lower than the second value.

3. Method according to Claim 2, in which the first value equals 0.

4. Method according to Claim 1, in which the second amplitude δv is constant.

5. Active hydraulic anti-vibration mount for implementing a method according to Claim 2 or 3, this mount being intended to be interposed between two rigid elements (M, V) and comprising:
- first and second rigid support elements (2, 3) intended to be integrated respectively with the two rigid elements to be connected,
- an elastomer body (5) connecting the two support elements (2, 3) and partially delimiting a working chamber (A) filled with liquid,
- a flexible wall (26) partially delimiting a compensation chamber (B) filled with liquid, which chamber is linked to the working chamber (A) by a throttled passage (C) also filled with liquid,
- a rigid partition (10) integral with the second support element (3) and interposed between the working chamber (A) and the compensation chamber (B), this rigid partition including a first regulating nozzle (E),
- an exciting device (17) which closes the first regulating nozzle of the rigid partition, this exciting device having a first face communicating with the liquid contained in the working chamber and a second face isolated from said working chamber, said exciting device being so mounted as to be movable perpendicularly to the rigid partition (10) at least between a rest position and a blocked position, said exciting device (17) not being in contact with the compensation chamber (B) and being adapted to generate counter-vibrations in the working chamber (A) by generating variations of volume of the working chamber which present a first amplitude ΔV,
- a control link (18) able to link the exciting device (17) to a control device (50) in order to control the movements of the exciting device,
**characterized in that** the rigid partition (10) is penetrated by a second regulating nozzle (45) which is closed by a valve device (32) movable perpendicularly to the rigid partition (10), this valve device having a first face in contact with the liquid contained in the working chamber (A) and a second face isolated from the working chamber, the movements of said valve device being limited by first and second stop devices (20, 30),
**in that** the second stop device (30) is itself movable perpendicularly to the rigid partition (10) between, firstly, a rest position where said second stop device rests against the valve device (32) in order to lock this valve device against the first stop device (20), and, secondly, an active position where said second stop device (30) is further away from the first stop device (20) and allows the valve device (32) a certain amount of free play, so as to enable variations of volume of the working chamber which are limited to a second amplitude δv such that the ratio δv / ΔV is less than 20%,
**in that** the second stop device (30) is elastically loaded towards its rest position,
and **in that** the second stop device (30) is linked to the exciting device (17) by means of a mechanical link with lost motion (33) which is able to:
. permit said second stop device (30) to remain in its rest position while the exciting device (17) is in a first range of positions relatively distant from its locked position,
. displace said second stop device towards its active position when the exciting device is in a first range of positions close to its blocked position,
. and maintain the second stop device in its active position when the exciting device is in its blocked position.

6. Anti-vibration mount according to Claim 5, in which the second face of the exciting device (17) communicates with a sealed pneumatic chamber (P) which includes a connection (18) able to be connected to an external pneumatic source (52).

7. Anti-vibration mount according to Claim 6, in which the exciting device (17) is a flexible membrane connected in a sealed manner to a casing (15, 16) and delimiting with said casing said pneumatic chamber (P).

8. Anti-vibration mount according to Claim 7, in which the casing (15, 16) of the pneumatic chamber (P) is contained in the compensation chamber (B).

9. Anti-vibration mount according to Claim 7 or 8, in which the flexible membrane (17) is made of elastomer and includes a peripheral bead (29) which projects towards the rigid partition (10) from the casing (15, 16) of the pneumatic chamber, this bead elastically urging the second stop device (30) towards its rest position, and said bead being elastically compressible under the pressure of the second stop device (30) when said second stop device is moved from its rest position to its active position.

10. Anti-vibration mount according to any one of Claims 7 to 9, in which the flexible membrane (17) is reinforced by a central reinforcing element (34) which includes hooking fingers (33) extending towards the rigid partition (10), said hooking fingers being engaged with free play against the second stop device (30) when the flexible membrane is in its first range of positions, and said hooking fingers including hooks (35) which rest against the second stop device (30) in order to pull this second stop device towards its active position when the flexible membrane (17) is in its second range of positions.

11. Anti-vibration mount according to Claim 10, in which the hooking fingers (33) are clipped to the second stop device (30).

12. Anti-vibration mount according to Claim 5, wherein the first nozzle (E) is delimited by a tubular duct (60) extending perpendicularly to the rigid wall (10) between a first end (61) which opens in the working chamber and a second end (62) which communicates with the exciting device (17), this tubular duct (60) being rigid with the second stop device (30).

13. Anti-vibration mount according to Claim 12, wherein the exciting device (17) is a flexible membrane connected in a sealed manner to a casing (42) and delimiting with said casing said pneumatic chamber (P).

14. Anti-vibration mount according to Claim 13, wherein the flexible membrane (17) is reinforced by a central reinforcing element (34) which includes fitting fingers (33) extending towards the rigid wall (10), said hooking fingers including hooks (35) which are adapted to come into abutment with a flange (63) which is unitary with the tubular duct (60) for driving the second stop device (30) towards its active position when the flexible membrane (17) is in its second range of positions.

15. Anti-vibration mount according to Claim 13 or Claim 14, wherein the casing (42) is constituted by a cover which has a bottom (42a) and a peripheral wall (42b) fixed to the second support element (3), the pneumatic chamber (P) being delimited between the flexible membrane (17) and the bottom (42a) of the cover, and the compensation chamber (B) being situated close to the rigid wall (10) in an inner space delimited between said rigid wall and said cover.

16. An-vibration mount according to Claim 15, wherein the first nozzle (E) communicates with an intermediate hydraulic chamber (D) full of liquid, which is delimited between the flexible membrane (17) and a rigid ring (55) fixed inside the cover (42).

17. Anti-vibration mount according to Claim 16, wherein the rigid ring (55) has a first annular ring (56), rigidly fixed to the cover (42) and a second annular rim (57) fitted with a compressible elastomer sealing lip (58) which bears in sealing elastic contact against the second stop device.

18. Anti-vibration mount according to any one of Claims 5 to 17, in which the second face of the valve device (32) communicates with the compensation chamber (B).

19. Anti-vibration mount according to any one of Claims 5 to 18, in which the second regulating nozzle (45) has an annular form and is arranged around the first regulating nozzle (E), the valve device forming a ring which is arranged inside the second regulating nozzle between the first and second stop devices (20, 30).

20. Anti-vibration mount according to any one of Claims 5 to 19, in which the first face of the exciting device (17) communicates with the working chamber (A) by means of an additional throttled passage (E) which is so dimensioned as to have a resonance frequency between 10 and 90 Hz.

21. Anti-vibration mount according to Claim 20, in which the additional throttled passage (E) is delimited between a fixed wall (20) integral with the rigid partition (10) and a rigid plate (30) forming the second stop device.

22. Anti-vibration mount according to any one of Claims 5 to 21, in which the elastomer body (5) has a bell-shaped side wall extending along a central axis (Z) between, firstly, an apex (6) integral with the first support element (2) and, secondly, an annular base (7) integral with the second support element (3) and with the rigid partition (10), the apex (6) of the elastomer body having recesses on each side of the first support element at least in a radial direction, so that said apex forms a shear plug having lower stiffness than said side wall in said radial direction.

23. Anti-vibration mount according to Claim 22, in which an intermediate rigid reinforcement (9) is embedded in the elastomer body between the shear plug (6) and the side wall, this intermediate reinforcing element surrounding the shear plug and limiting the radial deflections of the first support element (2).

24. Motor vehicle comprising:
- a body (V),
- an engine (M) mounted on the body by at least one hydraulic anti-vibration mount (1) according to any one of Claims 5 to 23, in which the second face of the exciting device (17) communicates with a pneumatic chamber (P),
- and a partial vacuum source (52) connected to the pneumatic chamber by means of a control device (50, 51) able to:
. cyclically vary a gas pressure obtaining inside the pneumatic chamber (P) so as to cause counter-vibrations to be generated in the working chamber by the exciting device (17) when the vehicle engine (M) is idling,
. and create a permanent partial vacuum in the pneumatic chamber (P) when the vehicle engine is running at a speed faster than idling speed, thus maintaining the exciting device (17) in its blocked position.

25. Motor vehicle comprising:
- a body (V),
- an engine (M),
- at least one hydraulic anti-vibration mount (1) for implementing a method according to Claim 4, this mount comprising:
. first and second rigid support elements (2, 3) one of which is integrated with the engine (M) and the other with the body (V),
. an elastomer body (5) connecting the two support elements (2, 3) and partially delimiting a working chamber (A) filled with a certain volume of liquid,
. a flexible wall (26) partially delimiting a compensation chamber (B) filled with liquid, which chamber is linked to the working chamber (A) by a throttled passage (C) also filled with liquid,
. a rigid partition (10) integral with the second support element (3) and interposed between the working chamber (A) and the compensation chamber (B), this rigid partition including a first regulating nozzle (E),
. an exciting device (17) which closes the first regulating nozzle of the rigid partition, this exciting device having a first face communicating with the liquid contained in the working chamber and a second face communicating with a pneumatic chamber (P), said exciting device being so mounted as to be movable perpendicularly to the rigid partition (10) between a rest position and a blocked position,
- and a partial vacuum source (52) connected to the pneumatic chamber by means of a control device (50, 51) which is able to:
. cyclically vary a gas pressure obtaining inside the pneumatic chamber (P) in order to cause the exciting device (17) to vibrate, creating variation in the volume of the working chamber having a first amplitude ΔV in order to generate counter-vibrations, when the vehicle engine (M) is running at idling speed,
. and create a permanent partial vacuum in the pneumatic chamber (P) when the vehicle engine is running at a speed above idling speed, thus maintaining the exciting device (17) in its blocked position,
**characterized in that** the rigid partition (10) is penetrated by a second regulating nozzle (45) which is closed by a valve device (32) freely movable perpendicularly to the rigid partition (10), this valve device having a first face in contact with the liquid contained in the working chamber (A) and a second face isolated from the working chamber, the movements of said valve device being limited by first and second stop devices (20, 30) so as to permit variations in the volume of the working chamber limited to a second constant amplitude δv such that the relationship δv/ΔV is less than 20%.

## Patentansprüche

1. Verfahren zum Dämpfen von Vibrationen zwischen zwei steifen Elementen (M, V), wobei zwischen diesen Elementen eine aktive, hydraulische Antivibrationsabstützung (1) eingefügt ist, welche umfasst:
- erste und zweite steife Armaturen (2, 3), welche an den jeweiligen beiden steifen, zusammenzufügenden Elementen befestigt sind,
- einen Elastomerkörper (5), welcher zwischen ihnen die beiden Armaturen (2, 3) verbindet und welcher teilweise eine mit einem gewissen Flüssigkeitsvolumen gefüllte Arbeitskammer (A) begrenzt,
- eine flexible Wandung (26), welche teilweise eine Kompensationskammer (B) begrenzt, welche mit Flüssigkeit gefüllt ist, wobei sie mit der Arbeitskammer (A) mittels eines schmalen, ebenfalls mit Flüssigkeit gefüllten Durchgangs (C) verbunden ist,
- eine steife Trennwand (10), welche fest mit der zweiten Armatur (3) verbunden ist und zwischen der Arbeitskammer (A) und der Kompensationskammer (B) eingefügt ist, wobei diese steife Trennwand eine erste Düse (E) aufweist,
- ein Erregermittel (17), welches die erste Düse der steifen Trennwand verschließt, wobei dieses Erregermittel eine erste Fläche, welche mit der in der Arbeitskammer enthaltenen Flüssigkeit in Verbindung steht, und eine zweite, von der Arbeitskammer isolierte Fläche aufweist, wobei das Erregermittel zur steifen Trennwand (10) orthogonal beweglich angeordnet ist,
wobei beim Verfahren das Erregermittel vibriert wird, so dass
Volumenvariationen in der Arbeitskammer eine erste Amplitude ΔV erzeugen, um Gegenvibrationen zu erzeugen,
wobei das Verfahren **dadurch gekennzeichnet ist, dass** eine Antivibrationsabstützung verwendet wird, deren steife Trennwand (10) von einer zweiten Düse (45) durchbohrt ist, welcher durch ein Klappenmittel (32) verschlossen ist, das zur steifen Trennwand orthogonal frei verschieblich ist, wobei dieses Klappenmittel eine erste, mit der in der Arbeitskammer (A) enthaltenen Flüssigkeit in Berührung stehende Fläche und eine zweite, von der Arbeitskammer isolierte Fläche aufweist, wobei die Verschiebungen des Klappenmittels durch erste und zweite Anschlagmittel (20, 30) begrenzt sind, derart, dass ermöglicht wird, dass
Volumenvariationen der Arbeitskammer auf eine zweite Amplitude δv begrenzt sind, so dass das Verhältnis δv/ΔV kleiner als 20% ist wenigstens solange das Erregermittel vibriert wird.

2. Verfahren nach Anspruch 1, bei dem das Erregermittel wenigstens zwischen einer Ruhestellung und einer Blockierstellung verschiebbar ist,
wobei die zweite Amplitude δv einen ersten Wert aufweist, solange sich das Erregermittel (17) in einem ersten Stellungsbereich befindet, welcher relativ entfernt von seiner Blockierstellung ist, und einen zweiten Wert, wenn sich das Erregermittel in der Blockierstellung befindet, wobei der erste Wert niedriger als der zweite Wert ist.

3. Verfahren nach Anspruch 2, bei dem der erste Wert gleich 0 ist.

4. Verfahren nach Anspruch 1, bei dem die zweite Amplitude δv konstant ist.

5. Aktive, hydraulische Antivibrationsabstützung für den Einsatz eines Verfahrens nach Anspruch 2 oder nach Anspruch 3, wobei diese Abstützung dafür ausgelegt ist, zwischen zwei steifen Elementen (M, V) eingefügt zu werden, und umfasst:
- erste und zweite steife Armaturen (2, 3), welche an den jeweiligen beiden steifen zusammenzufügenden Elementen befestigt sind,
- einen Elastomerkörper (5), welcher zwischen ihnen die beiden Armaturen (2, 3) verbindet und welcher teilweise eine mit Flüssigkeit gefüllte Arbeitskammer (A) begrenzt,
- eine flexible Wandung (26), welche teilweise eine Kompensationskammer (B) begrenzt, welche mit Flüssigkeit gefüllt ist, wobei sie mit der Arbeitskammer (A) mittels eines schmalen, ebenfalls mit Flüssigkeit gefüllten Durchgangs (C) verbunden ist,
- eine steife Trennwand (10), welche fest mit der zweiten Armatur (3) verbunden ist und zwischen der Arbeitskammer (A) und der Kompensationskammer (B) eingefügt ist, wobei diese steife Trennwand eine erste Düse (E) aufweist,
- ein Erregermittel (17), welches die erste Düse der steifen Trennwand verschließt, wobei dieses Erregermittel eine erste Fläche, welche mit der in der Arbeitskammer enthaltenen Flüssigkeit in Verbindung steht, und eine zweite, von der Arbeitskammer isolierte Fläche aufweist, wobei das Erregermittel zur steifen Trennwand (10) orthogonal beweglich angeordnet ist wenigstens zwischen einer Ruhestellung und einer Blockierstellung, wobei das Erregermittel (17) nicht in Berührung mit der Kompensationskammer (B) ist und dafür ausgelegt ist, Gegenvibrationen in der Arbeitskammer (A) zu generieren indem Volumenvariationen der Arbeitskammer mit einer ersten Amplitude ΔV erzeugt werden,
- und eine Steuerverbindung (18), welche dazu ausgelegt ist, das Erregermittel (17) mit einer Steuer-/Regelvorrichtung (50) zu verbinden, um die Verschiebungen des Erregermittels zu
steuern/regeln,
**dadurch gekennzeichnet, dass**
die steife Trennwand (10) von einer zweiten Düse (45) durchbohrt ist, welche durch ein Klappenmittel (32) verschlossen ist, das zur steifen Trennwand (10) orthogonal verschieblich ist, wobei dieses Klappenmittel eine erste, mit der in der Arbeitskammer (A) enthaltenen Flüssigkeit in Berührung stehende Fläche und eine zweite, von der Arbeitskammer isolierte Fläche aufweist, wobei die Verschiebungen des Klappenmittels durch erste und zweite Anschlagmittel (20, 30) begrenzt sind,
dass das zweite Anschlagmittel (30) selbst orthogonal zur steifen Trennwand (10) beweglich ist zwischen einer Ruhestellung einerseits, in der das zweite Anschlagmittel am Klappenmittel (32) anliegt, um dieses Klappenmittel gegen das erste Anschlagmittel (20) zu blockieren, und einer aktiven Stellung andererseits, in der das zweite Anschlagmittel (30) weiter entfernt vom ersten Anschlagmittel (20) ist und dem Klappenmittel (32) ein gewisses Spiel lässt, wobei Volumenvariationen der
Arbeitskammer ermöglicht sind, welche auf eine zweite Amplitude δv
begrenzt sind, so dass das Verhältnis δv/ΔV kleiner als 20% ist,
dass das zweite Anschlagmittel (30) zu seiner Ruhestellung elastisch gespannt ist,
und dass das zweite Anschlagmittel (30) mit dem Erregermittel (17) vermittels einer mechanischen Verbindung zur Totweg-Bewegung (33) verbunden ist, welche dafür ausgelegt ist:
es dem zweiten Anschlagmittel (30) zu ermöglichen, in seiner Ruhestellung zu verbleiben, solange sich das Erregermittel (17) in einem ersten Stellungsbereich befindet, welcher relativ entfernt von seiner Blockierstellung ist,
das zweite Anschlagmittel zu seiner aktiven Stellung zu verschieben, wenn sich das Erregermittel in einem zweiten Stellungsbereich nahe seiner Blockierstellung befindet,
und das zweite Anschlagmittel in seiner aktiven Stellung zu halten, wenn sich das Erregermittel in seiner Blockierstellung befindet.

6. Antivibrationsabstützung nach Anspruch 5, bei der die zweite Fläche des Erregermittels (17) mit einer dichten pneumatischen Kammer (P) in Verbindung steht, welche ein Anschlussstück (18) umfasst, welches dazu ausgelegt ist, mit einer externen pneumatischen Quelle (52) verbunden zu werden.

7. Antivibrationsabstützung nach Anspruch 6, bei der das Erregermittel (17) eine flexible Membran ist, welche auf dichte Weise mit einem Gehäuse (15, 16) verbunden ist, wobei es mit diesem die pneumatische Kammer (P) begrenzt.

8. Antivibrationsabstützung nach Anspruch 7, bei der das Gehäuse (15, 16) der pneumatischen Kammer (P) in der Kompensationskammer (B) enthalten ist.

9. Antivibrationsabstützung nach Anspruch 7 oder Anspruch 8, bei der die flexible Membran (17) aus Elastomer hergestellt ist und einen Umfangswulst (29) umfasst, welcher ausgehend vom Gehäuse (15, 16) der pneumatischen Kammer zur steifen Trennwand (10) vorsteht, wobei dieser Wulst das zweite Anschlagmittel (30) elastisch in seine Ruhestellung spannt und wobei der Wulst elastisch komprimierbar ist unter dem Druck des zweiten Anschlagmittels (30), wenn das zweite Anschlagmittel von seiner Ruhestellung in seine aktive Stellung verschoben wird.

10. Antivibrationsabstützung nach einem der Ansprüche 7 bis 9, bei der die flexible Membran durch eine zentrale Armatur (34) verstärkt ist, welche sich zur steifen Trennwand (10) erstreckende Festhaltefinger (33) umfasst, wobei die Festhaltefinger mit Spiel am zweiten Anschlagmittel (30) eingreifen, wenn sich die flexible Membran in ihrem ersten Stellungsbereich befindet, und wobei die Festhaltefinger Haken (35) umfassen, welche auf dem zweiten Anschlagmittel (30) aufliegen, um das zweite Anschlagmittel zu seiner aktiven Stellung zu ziehen, wenn sich die flexible Membran (17) in ihrem zweiten Stellungsbereich befindet.

11. Antivibrationsabstützung nach Anspruch 10, bei der die Festhaltefinger (33) auf dem zweiten Anschlagmittel (30) eingeklickt sind.

12. Antivibrationsabstützung nach Anspruch 5, bei der die erste Düse (E) durch eine rohrförmige Leitung (60) begrenzt ist, welche sich orthogonal zur steifen Trennwand (10) zwischen einem ersten Ende (61), welches in die Arbeitskammer mündet, und einem zweiten Ende (62) erstreckt, welches in Verbindung mit dem Erregermittel (17) steht, wobei diese rohrförmige Leitung (60) fest mit dem zweiten Anschlagmittel (30) verbunden ist.

13. Antivibrationsabstützung nach Anspruch 12, bei der das Erregermittel (17) eine flexible Membran ist, welche auf dichte Weise mit einem Gehäuse (42) verbunden ist, wobei sie mit diesem die pneumatische Kammer (P) begrenzt.

14. Antivibrationsabstützung nach Anspruch 13, bei der die flexible Membran (17) durch eine zentrale Armatur (34) verstärkt ist, welche Festhaltefinger (33) aufweist, die sich zur steifen Trennwand (10) erstrecken, wobei die Festhaltefinger Haken (35) umfassen, welche dazu ausgelegt sind, auf einem mit der rohrförmigen Leitung (60) einstückigen Rand (63) anzuliegen, um das zweite Anschlagmittel (30) in seine aktive Stellung zu ziehen, wenn sich die flexible Membran in ihrem zweiten Stellungsbereich befindet.

15. Antivibrationsabstützung nach Anspruch 13 oder Anspruch 14, bei der das Gehäuse (42) durch einen Deckel gebildet ist, der einen Boden (42a) und eine Umfangswandung (42b) aufweist, welche mit der zweiten Armatur (3) fest verbunden sind, wobei die pneumatische Kammer (P) zwischen der flexiblen Membran (17) und dem Boden (42a) des Deckels begrenzt ist und wobei die Kompensationskammer (B) in der Nähe der steifen Trennwand (10) in einem Innenraum angeordnet ist, welcher zwischen der steifen Trennwand und dem Deckel begrenzt ist.

16. Antivibrationsabstützung nach Anspruch 15, bei der die erste Düse (E) mit einer dazwischenliegenden, hydraulischen, mit Flüssigkeit gefüllten Kammer (D) in Verbindung steht, welche zwischen der flexiblen Membran (17) und einer steifen Krone (55) begrenzt ist, welche auf der Innenseite des Deckels (42) befestigt ist.

17. Antivibrationsabstützung nach Anspruch 16, bei der die steife Krone (55) einen ersten ringförmigen Rand (56), der steif mit dem Deckel 42 verbunden ist, und einen zweiten ringförmigen Rand (57) aufweist, welcher mit einer komprimierbaren Dichtungslippe (58) aus Elastomer ausgestattet ist, welche dicht am zweiten Anschlagmittel anliegt.

18. Antivibrationsabstützung nach einem der Ansprüche 5 bis 17, bei der die zweite Fläche des Klappenmittels (32) in Verbindung mit der Kompensationskammer (B) steht.

19. Antivibrationsabstützung nach einem der Ansprüche 5 bis 18, bei der die zweite Düse (45) eine Ringform aufweist und um die erste Düse (E) angeordnet ist, wobei das Klappenmittel eine Scheibe bildet, welche in der zweiten Düse zwischen dem ersten und dem zweiten Anschlagmittel (20, 30) angeordnet ist.

20. Antivibrationsabstützung nach einem der Ansprüche 5 bis 19, bei der die erste Fläche des Erregermittels (17) mit der Arbeitskammer (A) in Verbindung steht vermittels eines zusätzlichen schmalen Durchgangs (E), welcher durch die erste Düse gebildet ist, die derart dimensioniert ist, dass sie eine Resonanzfrequenz aufweist, welche zwischen 10 und 90 Hz enthalten ist.

21. Antivibrationsabstützung nach Anspruch 20, bei der der zusätzliche schmale Durchgang (E) zwischen einer festen Wandung (20), welche einstückig mit der steifen Trennwand (10) ist, und einer steifen Platte (30) begrenzt ist, welche das zweite Anschlagmittel bildet.

22. Antivibrationsabstützung nach einem der Ansprüche 5 bis 21, bei der der Elastomerkörper (5) eine seitliche Wandung in Form einer Glocke aufweist, welche sich entlang einer zentralen Achse (Z) zwischen einem Scheitel (6) einerseits, welcher fest mit der ersten Armatur (2) verbunden ist, und einer ringförmigen Basis (7) andererseits, welche fest mit der zweiten Armatur (3) und der steifen Trennwand (10) verbunden ist, erstreckt, wobei der Scheitel (6) des Elastomerkörpers auf beiden Seiten von der ersten Armatur wenigstens in radialer Richtung ausgespart ist, derart, dass der Scheitel ein Abscherstück bildet, welches in der radialen Richtung eine geringere Steifigkeit aufweist als die seitliche Wandung.

23. Antivibrationsabstützung nach Anspruch 22, bei der eine dazwischenliegende, steife Armatur (9) im Elastomerkörper eingebettet ist zwischen dem Abscherstück (6) und der seitlichen Wandung, wobei diese dazwischenliegende Armatur das Abscherstück umgibt und die radialen Federwege der ersten Armatur (2) begrenzt.

24. Kraftfahrzeug, umfassend:
- eine Karosserie (V),
- einen Motor (M), welcher auf der Karosserie vermittels wenigstens einer hydraulischen Antivibrationsabstützung (1) nach einem der Ansprüche 5 bis 23, abgestützt ist, bei der die zweite Fläche des Erregermittels (17) mit einer pneumatischen Kammer (P) in Verbindung steht,
- und eine Unterdruckquelle (52), welche vermittels einer Steuer-/Regelvorrichtung (50, 51) mit der pneumatischen Kammer verbunden ist und dafür ausgelegt ist:
einen in der pneumatischen Kammer (P) herrschenden Gasdruck zyklisch derart zu variieren, dass Gegenvibrationen in der
Arbeitskammer durch das Erregermittel (17) erzeugt werden, wenn der Motor (M) des Fahrzeugs in einem Leerlaufbereich arbeitet,
und die pneumatische Kammer (P) unter permanenten Unterdruck zu setzen, wenn der Motor des Fahrzeugs in einem Bereich über einem Leerlaufbereich arbeitet, wobei dabei das Erregermittel (17) in seiner Blockierstellung gehalten ist.

25. Kraftfahrzeug, umfassend:
- eine Karosserie (V),
- einen Motor (M),
- wenigstens eine hydraulische Antivibrationsabstützung (1) zum Einsetzen des Verfahrens nach Anspruch 4, wobei diese Abstützung umfasst:
erste und zweite steife Armaturen (2, 3), von denen die eine mit dem Motor (M) und die andere mit der Karosserie (V) fest verbunden ist, einen Elastomerkörper (5), welcher zwischen ihnen die beiden Armaturen (2, 3) verbindet und welcher teilweise eine mit einem gewissen Flüssigkeitsvolumen gefüllte Arbeitskammer (A) begrenzt, eine flexible Wandung (26), welche teilweise eine Kompensationskammer (B) begrenzt, welche mit Flüssigkeit gefüllt ist, wobei sie mit der Arbeitskammer (A) mittels eines schmalen, ebenfalls mit Flüssigkeit gefüllten Durchgangs (C) verbunden ist, eine steife Trennwand (10), welche mit der zweiten Armatur (3) fest verbunden ist und zwischen der Arbeitskammer (A) und der Kompensationskammer (B) eingefügt ist, wobei diese steife Trennwand eine erste Düse (E) aufweist,
ein Erregermittel (17), welches die erste Düse der steifen Trennwand verschließt, wobei dieses Erregermittel eine erste, mit der in der Arbeitskammer enthaltenen Flüssigkeit in Verbindung stehende Fläche und eine zweite, mit der pneumatischen Kammer (P) in Verbindung stehende Fläche aufweist, wobei das Erregermittel zur steifen Trennwand (10) orthogonal beweglich angeordnet ist zwischen einer Ruhestellung und einer Blockierstellung,
- und eine Unterdruckquelle (52), welche vermittels einer Steuer-/Regelvorrichtung (50, 51) mit der pneumatischen Kammer verbunden ist und dafür ausgelegt ist:
einen in der pneumatischen Kammer herrschenden Gasdruck zyklisch derart zu variieren, dass das Erregermittel (17) vibriert wird, wobei Volumenvariationen der Arbeitskammer erzeugt werden, welche eine erste Amplitude ΔV aufweisen, um Gegenvibrationen zu erzeugen, wenn der Motor (M) des Fahrzeugs im Leerlaufbereich arbeitet,
und die pneumatische Kammer (P) unter permanenten Unterdruck zu setzen, wenn der Motor des Fahrzeugs in einem Bereich über dem Leerlaufbereich arbeitet, wobei so das Erregermittel (17) in seiner Blockierstellung gehalten ist,
**dadurch gekennzeichnet, dass** die steife Trennwand (10) von einer zweiten Düse (45) durchbohrt ist, welche durch ein Klappenmittel (32) verschlossen ist, welches zur steifen Trennwand (10) orthogonal verschieblich ist, wobei dieses Klappenmittel eine erste, mit der in der Arbeitskammer (A) enthaltenen Flüssigkeit in Berührung stehende Fläche und eine zweite, von der Arbeitskammer isolierte Fläche aufweist, wobei die Verschiebungen des Klappenmittels durch erste und zweite Anschlagmittel (20, 30) begrenzt sind, derart, dass es möglich ist, dass Volumenvariationen der Arbeitskammer auf eine zweite konstante Amplitude δv begrenzt sind, so dass das Verhältnis δv/ΔV kleiner als 20% ist.
